# EUROPÄISCHE PATENTSCHRIFT

(11) **EP 3 755 899 B1**
(45) Veröffentlichungstag und Bekanntmachung des Hinweises auf die Patenterteilung: **13.04.2022**
(21) Anmeldenummer: 19706522.0
(22) Anmeldetag: 18.02.2019
(51) Int. Cl.: F03D 1/06

(54) **ROTORBLATT EINER WINDENERGIEANLAGE MIT EINER SPLITTERPLATTE**
ROTOR BLADE OF A WIND TURBINE, HAVING A SPLITTER PLATE
PALE DE ROTOR D'UNE INSTALLATION ÉOLIENNE COMPRENANT UNE PLAQUE DE DÉVIATION DE LA COUCHE LIMITE

(30) Priorität: 19.02.2018 DE 102018103678
(43) Veröffentlichungstag der Anmeldung: 30.12.2020
(73) Patentinhaber: Wobben Properties GmbH, 26607 Aurich (DE)
(72) Erfinder: KNEISSL, Stefan, 47906 Kempen (DE); STEMBERG, Jochen, 26607 Aurich (DE)
(74) Vertreter: Eisenführ Speiser
(86) Internationale Anmeldenummer: PCT/EP2019/053932
(87) Internationale Veröffentlichungsnummer: WO 2019/158744

(56) Entgegenhaltungen:
- EP-A1- 2 063 106
- EP-A1- 2 322 793
- EP-A1- 2 604 856
- EP-A1- 2 806 156
- DE-U1-202016 101 461
- KR-B1- 101 466 076
- US-A- 5 265 830

## Beschreibung

Die vorliegende Erfindung betrifft ein Rotorblatt einer Windenergieanlage, eine Windenergieanlage mit dem Rotorblatt, eine Splitterplatte zur Verwendung an dem Rotorblatt und ein Verfahren zum Optimieren des Rotorblatts.

Windenergieanlagen, die aus der kinetischen Energie des Windes elektrische Energie erzeugen und in ein elektrisches Stromnetz einspeisen, sind allgemein bekannt. Heutzutage werden in derartigen Windenergieanlagen zum Steigern der Effizienz häufig Rotorblätter mit einem dünnen Plattprofil und einer hohen Blatttiefe verwendet. Dies erfordert jedoch eine mehrteilige Konstruktion mit Hinterkantensegmenten, die sehr kostenintensiv und störanfällig ist. Alternativ können Rottorblätter mit einer zumindest teilweisen stumpfen Hinterkante im Innenbereich verwendet werden. Rotorblätter mit einer zumindest teilweisen stumpfen Hinterkante haben allerdings den Nachteil, dass im Bereich der stumpfen Hinterkante die Auftriebsleistung aufgrund der geringeren Blatttiefe reduziert ist und des Weiteren sich in diesem Bereich Wirbel in Form einer sogenannten Kármánstraße bilden können, die zu einem erhöhten Luftwiderstand und einer erhöhten Geräuschemission führen.

Die Verwendung von Splitterplatten zum Verbessern der aerodynamischen Eigenschaften von Flügeln von Flugzeugen ist bekannt. Zum Beispiel offenbart US 5,265,830 A eine Splitterplatte in Form einer einfachen geraden Platte unter einem vordefinierten Winkel an einer stumpfen Hinterkante eines Flügels für ein Flugzeug anzubringen, um die aerodynamischen Eigenschaften des Flügels zu verbessern. Das Anbringen einer solchen Splitterplatte an der Hinterkante eines Rotorblattes erlaubt es, die Bildung einer Kármánstraße und einen somit erhöhten Widerstand zu verhindern. Dabei wird jedoch in Kauf genommen, dass sich die Strömung um das Rotorblatt weiterhin an der Hinterkante ablöst und daher kein Auftriebsgewinn erzielbar ist.

Das Deutsche Patent- und Markenamt hat in der Prioritätsanmeldung zur vorliegenden Anmeldungen folgenden Stand der Technik recherchiert: DE 10 2011 012 965 B4, DE 20 2016 101 461 U1, US 5,265,830 A, EP 2 063 106 A1 und WO 2016/055076 A1.

Der Erfindung liegt daher die Aufgabe zugrunde, wenigstens eines der vorangegangenen Probleme zu adressieren. Insbesondere soll der Stand der Technik verbessert werden und eine Lösung vorgeschlagen werden, die es ermöglicht, die Leistungen von Rotorblättern mit zumindest einer teilweisen stumpfen Hinterkante zu verbessern bei gleichzeitiger Reduzierung der Geräuschemission.

Diese Aufgabe wird erfindungsgemäß gelöst durch ein Rotorblatt einer Windenergieanlage, wobei das Rotorblatt aufweist:
- eine Vorderkante und eine stumpfe Hinterkante,
- eine Saugseite und eine Druckseite zwischen der Vorderkante und der Hinterkante, wobei die Saugseite bei Luftumströmung eine Scherschicht erzeugt, wobei die Vorderkante, die stumpfe Hinterkante, die Saugseite und die Druckseite ein Bezugsystem bilden, in dem die Vorderkante vor der Hinterkante und die Saugseite oberhalb der Druckseite angeordnet ist, und wobei in diesem Bezugsystem eine Profilsehnenrichtung von der Vorderkante zur Hinterkante verläuft, und
- eine Splitterplatte, die an der stumpfen Hinterkante des Rotorblattes angeordnet ist, wobei die Splitterplatte aufweist:
- eine Wurzelkante, wobei die Wurzelkante an, insbesondere entlang, der Hinterkante unterhalb eines Übergangs der Saugseite in die Hinterkante angeordnet ist,
- eine Endkante, wobei die Endkante eine freie Kante bildet, und
- eine Fläche zwischen der Wurzelkante und der Endkante, wobei die Fläche wenigstens einen gekrümmten Teil zwischen der Wurzelkante und der Endkante aufweist und wenigstens ein Teil der Fläche in der von der Saugseite erzeugten Scherschicht liegt.

Durch das Anordnen der Splitterplatte unterhalb des Übergangs der Saugseite in die Hinterkante kann effektiv die Bildung einer Kármánstraße verhindert werden, sodass sowohl der Widerstand als auch die Geräuschemission des Rotorblattes vermindert werden. Gleichzeitig kann durch die Krümmung der Splitterplatte und das Anordnen der Splitterplatte so, dass wenigstens ein Teil der Fläche der Splitterplatte in der Scherschicht liegt, erreicht werden, dass die Scherschicht an der Fläche der Splitterplatte wieder anlegt. Dies sorgt für einen verbesserten Auftrieb des Rotorblattes im Bereich der Splitterplatte. Mittels einer gekrümmten Splitterplatte, wie oben beschrieben, kann folglich die Leistung eines Rotorblattes mit einer stumpfen Hinterkante bei gleichzeitiger Reduzierung der Geräuschemission verbessert werden.

Die Saugseite des Rotorblattes entspricht der Fläche des Rotorblattes, die im Betrieb der Windenergieanlage einen Auftrieb erzeugt und somit bei Luftumströmung die Drehung eines Rotors, an dem das Rotorblatt befestigt ist, antreibt. Die Druckseite liegt dabei der Saugseite gegenüber. Bei Luftumströmung bildet sich sowohl an der Saugseite als auch an der Druckseite eine Scherschicht, wobei im Folgenden nur die Scherschicht an der Saugseite betrachtet werden soll.

Scherschichten bilden sich in Übergangsbereichen von parallelen Strömungen mit unterschiedlichen Geschwindigkeiten aus. Im Falle eines Rotorblattes kann davon ausgegangen werden, dass eine Luftströmung, die das Rotorblatt umströmt, direkt an der Fläche des Rotorblattes aufgrund der Reibung zwischen Rotorblatt und Luft eine Geschwindigkeit von Null aufweist. Mit zunehmendem Abstand von der Fläche wird die Geschwindigkeit größer, bis die Geschwindigkeit der umgebenden Luftströmung erreicht ist. Dieser Übergang wird als Scherschicht oder Grenzschicht bezeichnet, wobei die Dicke der Scherschicht von der inneren Reibung der Luft abhängt. Es ist dabei bekannt, dass eine solche Scherschicht bei einer Strömungsgeschwindigkeit, die in einem typisch Bereich einer Strömungsgeschwindigkeit um ein Rotorblatt im Betrieb einer Windenergieanlage liegt, an der Hinterkante des Rotorblattes über das Ende der Saugseite hinaus reicht und sich erst in einem gewissen Abstand von der Hinterkante des Rotorblattes, zum Beispiel durch Wirbelbildung, auflöst. Dabei verläuft die Scherschicht an der Hinterkante zwischen Totwassergebiet und Profilumströmung.

Ein erfindungsgemäßes Rotorblatt weist zumindest teilweise eine stumpfe Hinterkante auf, das heißt, dass das Rotorblatt an seinem hinteren Ende, das heißt, an der Hinterkante, noch eine spezifische Hinterkantendicke aufweist und demnach nicht beliebig spitz zuläuft. Andere Teile des Rotorblattes, insbesondere die weit außen liegenden Teile des Rotorblattes, weisen bevorzugt keine stumpfe Hinterkante auf. In einer bevorzugten Ausführungsform weist die stumpfe Hinterkante eine Hinterkantendicke von mehr als 0,5% einer Profiltiefe des Rotorblattes auf.

Des Weiteren kann das Rotorblatt zusätzlich zur Splitterplatte weitere aerodynamische Elemente, wie einen oder mehrere Gurney-Flaps, Vortexgeneratoren oder Vorflügel, aufweisen. Bevorzugt weist das Rotorblatt zusätzlich einen Gurney-Flap oder ähnliche Aufbauten auf der Druckseite auf. Ein Gurney-Flap erzeugt eine Krümmung der Scherschicht hinter der Saugseite, so dass die Scherschicht besser an eine gekrümmte Fläche einer Splitterplatte anlegen kann. Eine Kombination eines Gurney-Flaps mit einer Splitterplatte kann also die Leistung des Rotorblattes zusätzlich steigern. In einer Ausführungsform des Rotorblatts mit Gurney-Flap kann die stumpfe Hinterkante auch allein durch den Gurney-Flap erzeugt werden.

Die Splitterplatte ist in dem Bereich des Rotorblattes angeordnet, in dem das Rotorblatt die stumpfe Hinterkante aufweist, und erstreckt sich entlang der stumpfen Hinterkante. In einer bevorzugten Ausführungsform verläuft die Wurzelkante parallel zu dem Übergang der Saugseite in die Hinterkante.

Es wird vorgeschlagen, dass der gekrümmte Teil der Fläche zumindest teilweise in der Scherschicht liegt. Je nach Ausgestaltung der Saugseite des Rotorblattes kann der Verlauf der Scherschicht, insbesondere die Krümmung der Scherschicht, hinter dem Übergang der Saugseite in die Hinterkante variieren. Wird zumindest ein Teil der gekrümmten Fläche in die Scherschicht gebracht, ermöglicht dies ein besonders effektives Wiederanlegen der Scherschicht an den gekrümmten Teil der Fläche der Splitterplatte.

Es wird weiter vorgeschlagen, dass die Krümmung des gekrümmten Teils, der in der Scherschicht liegt, basierend auf einer Bestimmung der Belastbarkeit der Scherschicht bestimmt wird. Dabei ist die Belastbarkeit der Scherschicht definiert durch den maximalen Druckgradienten, den die Scherschicht ablösefrei überwinden kann. Die Bestimmung der Krümmung der Splitterplatte basierend auf der Belastbarkeit der Scherschicht hat den Vorteil, dass die Splitterplatte für jede Rotorblattgeometrie so angepasst werden kann, dass ein optimales Anlegen der Scherschicht an die Splitterplatte erreicht werden kann.

Weiter wird vorgeschlagen, dass der gekrümmte Teil der Fläche eine Rechtskrümmung in Bezug auf die Profilsehnenrichtung des Rotorblattes aufweist. Durch Rechtskrümmung der Fläche in Bezug auf die Profilsehnenrichtung kann erreicht werden, dass die Fläche der Splitterplatte der Scherschicht optimal folgt und somit die Auftriebsleistung des Rotorblattes verbessert wird. In einer bevorzugten Ausführungsform ist ein Punkt auf der Fläche der Splitterplatte, an dem die Fläche der Splitterplatte einen maximalen Abstand zu einer Profilsehne des Rotorblattes aufweist, die Wurzelkante. Dabei ist die Profilsehne oder auch Chordlinie definiert als eine gedachte Verbindungslinie zwischen einer Profilnase und einer Profilhinterkante des Rotorblattes. Alternativ kann der Punkt auf der Fläche der Splitterplatte, an dem die Fläche der Splitterplatte einen maximalen Abstand zu der Profilsehne des Rotorblattes aufweist, auch zwischen der Wurzelkante und der Endkante liegen.

Weiter wird vorgeschlagen, dass der gekrümmte Teil der Fläche einen ersten Teil und einen zweiten Teil aufweist, wobei der erste Teil und der zweite Teil unterschiedliche Krümmungen aufweisen. In einer bevorzugten Ausführungsform weist der erste Teil eine Linkskrümmung in Bezug auf die Profilsehnenrichtung des Rotorblattes und der zweite Teil eine Rechtskrümmung in Bezug auf die Profilsehnenrichtung des Rotorblattes auf. Dabei ist es vorteilhaft, wenn der zweite Teil in Profilsehnenrichtung an den ersten Teil anschließt. Der Übergang zwischen dem ersten Teil, der eine Linkskrümmung aufweist, und dem zweiten Teil, der eine Rechtskrümmung aufweist, kann kontinuierlich erfolgen oder durch das Vorsehen einer Kante. Des Weiteren ist es vorteilhaft, wenn der zweite Teil in Profilsehnenrichtung ab wenigstens zwei Dritteln einer Länge der Splitterplatte in Profilsehnenrichtung ansetzt. In einer bevorzugten Ausführungsform nimmt die Rechtskrümmung des zweiten Teils in Profilsehnenrichtung kontinuierlich ab. Dadurch kann ein optimales Anlegen der Scherströmung an die Splitterplatte befördert werden. Weiter wird vorgeschlagen, dass der Punkt auf der Fläche der Splitterplatte, an dem die Fläche der Splitterplatte einen maximalen Abstand zu der Profilsehne des Rotorblattes aufweist, in dem zweiten Teil liegt.

Es wird weiter vorgeschlagen, dass der gekrümmte Teil der Fläche an der Wurzelkante beginnt.

Weiter wird vorgeschlagen, dass die Splitterplatte einen geraden Teil aufweist und der gerade Teil in Profilsehnenrichtung an den gekrümmten Teil anschließt und mit der Endkante endet. Da die Scherströmung hinter der Saugseite oft nur noch eine geringe Krümmung aufweist, kann das Bereitstellen eines geraden Teils nach dem gekrümmten Teil eine verbesserte Anpassung an den Verlauf der Scherströmung bieten. Daher ist es insbesondere bevorzugt, dass der gerade Teil wenigstens teilweise in der Scherströmung liegt.

Es wird außerdem vorgeschlagen, dass die Hinterkante des Rotorblattes eine Hinterkantendicke aufweist und die Länge der Splitterplatte in Profilsehnenrichtung zwischen Wurzelkante und Endkante 0,75 - 1,5-mal die Hinterkantendicke beträgt. Alternative wird vorgeschlagen, dass die Länge der Splitterplatte geringer ist als eine Strecke, die definiert wird durch die Hinterkante und einen Schnittpunkt einer Tangente an der Saugseite im Bereich der Hinterkante mit der Profilsehne. Eine Splitterplatte mit einer Länge in dem oben genannten Bereich hat den Vorteil, dass die Splitterplatte die gleiche Leistung erzeugen kann, wie zum Beispiel eine geschlossene Hinterkante, bei weniger Materialverbrauch.

In einer bevorzugten Ausführungsform weist die Endkante der Splitterplatte einen größeren Abstand zu der Profilsehne des Rotorblattes auf als die Wurzelkante, wobei die Endkante der Splitterplatte in der Scherschicht liegt. Dies hat den Vorteil, dass die Splitterplatte mit einer geringen Länge ausgeführt werden kann, was zu einer Material- und Transportkostenersparnis führt.

Weiter wird vorgeschlagen, dass die Splitterplatte so an der Hinterkante des Rotorblattes angeordnet ist, dass die Wurzelkante einen Abstand zu der Profilsehne des Rotorblattes aufweist. In einer bevorzugten Ausführungsform wird der Abstand der Wurzelkante zur Profilsehne so eingestellt, dass ein Teil der Splitterplatte in der Scherschicht liegt.

Des Weiteren wird vorgeschlagen, die Splitterplatte mittels eines Scharniers an der Hinterkante des Rotorblattes anzuordnen. Dies hat den Vorteil, dass die Splitterplatte zum Beispiel beim Transport eingeklappt werden kann, sodass sich für das Rotorblatt ein geringes Transportmaß ergibt. Ein einfaches Aufklappen der Splitterplatte erleichtert dann die Montage vor Ort. Des Weiteren kann eine aktive Steuerung der Splitterplatte vorgesehen werden, die ein Aufklappen und Einklappen in Abhängigkeit von einer erwünschten Leistung der Windenergieanlage steuert. Alternative kann das Scharnier auch eine Lagerung unter Federkraft aufweisen, sodass sich die Splitterplatte beim Überschreiten einer vorbestimmten Druckkraft selbständig einklappt.

Erfindungsgemäß wird weiter eine Windenergieanlage mit einem Rotorblatt wie oben beschrieben vorgeschlagen.

Weiter wird erfindungsgemäß eine Splitterplatte zur Verwendung an einem Rotorblatt einer Windenergieanlage vorgeschlagen, wobei die Splitterplatte aufweist:
- eine Wurzelkante, wobei die Wurzelkante dazu geeignet ist, an, insbesondere entlang, einer Hinterkante des Rotorblattes angeordnet zu werden,
- eine Endkante, wobei die Endkante dazu geeignet ist, eine freie Kante zu bilden, und
- eine Fläche zwischen der Wurzelkante und der Endkante, wobei die Fläche wenigstens einen gekrümmten Teil zwischen der Wurzelkante und der Endkante aufweist und wenigstens ein Teil der Fläche dazu geeignet ist, in einer von einer Saugseite des Rotorblattes erzeugten Scherschicht zu liegen.

Des Weiteren wird erfindungsgemäß ein Verfahren zum Optimieren eines Rotorblattes einer Windenergieanlage nach Anspruch 1 vorgeschlagen, wobei das Verfahren die Schritte aufweist:
- Bestimmen eines Strömungsbildes des Rotorblattes, wobei das Bestimmen ein Bestimmen einer Lage einer Scherschicht umfasst, die von einer Saugseite des Rotorblattes erzeugt wird, und
- Bestimmen eines Abstandes der Wurzelkante der Splitterplatte von einer Profilsehne des Rotorblattes und einer Krümmung der Splitterplatte so, dass wenigstens ein Teil der Splitterplatte in der Scherströmung liegt.

Es sollte verstanden werden, dass das Rotorblatt nach Anspruch 1, die Windenergieanlage nach Anspruch 14 und das Verfahren nach Anspruch 15 ähnliche und/oder identische bevorzugte Ausführungsformen aufweisen, wie sie insbesondere in den abhängigen Ansprüchen definiert sind.

Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Ansicht einer ein erfindungsgemäßes Rotorblatt aufweisenden Windenergieanlage.
- Fig.2: zeigt schematisch einen Profilschnitt eines erfindungsgemäßen Rotorblattes mit einer Splitterplatte.
- Fig. 3 bis 5: zeigten schematisch verschiedene Ausführungsformen einer erfindungsgemäßen Splitterplatte.

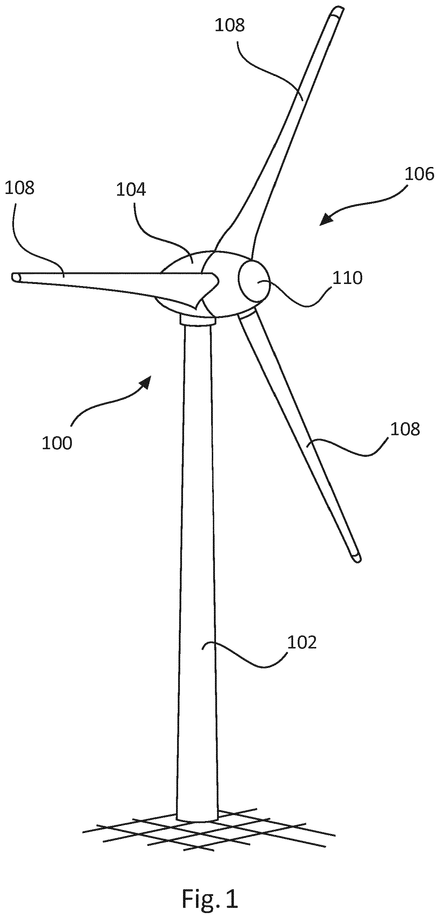

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei erfindungsgemäßen Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

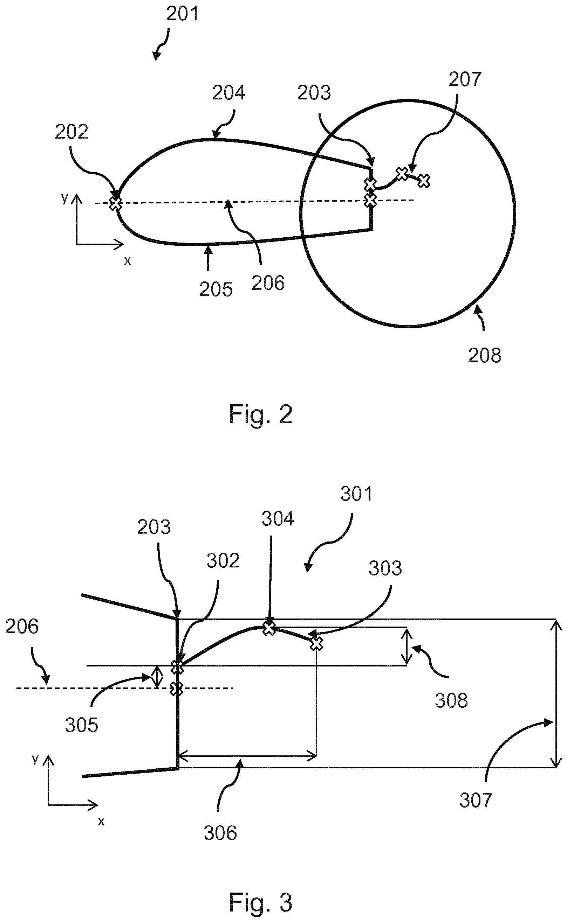

Fig. 2 zeigt schematisch einen Profilschnitt durch ein Rotorblatt der Windenergieanlage 106. Das Rotorblatt 201 weist dabei eine Profilnase 202 und eine Hinterkante 203 auf. Die Hinterkante 203 ist für dieses Profil als stumpfe Hinterkante 203 mit einer spezifischen Hinterkantendicke ausgestaltet. Die stumpfe Hinterkante 203 erstreckt sich dabei bevorzugt von einem Ansatzpunkt des Rotorblatts 201 am Rotor nach außen, wobei ab einer bestimmten Länge des Rotorblatts 201 die stumpfe Hinterkante 203 in eine zusammenlaufende Hinterkante übergeht. Des Weiteren weist das Rotorblatt 201 eine Saugseite 204 und eine Druckseite 205 auf. Die Profilsehne 206 definiert von der Profilnase 202 zur Hinterkante 203 eine Profilsehnenrichtung, wobei die Profilsehnenrichtung in der Zeichnung der X-Achsen-Richtung entspricht. An der Saugseite 204 des Rotorblatts 201 wird eine Scherströmung erzeugt, wobei angenommen wird, dass die Luft um das Rotorblatt 201 in Profilsehnenrichtung, das heißt X-Richtung, strömt. Die Scherströmung setzt sich dabei über den Übergang der Saugseite 204 zur Hinterkante 203, das heißt in dieser Ausführungsform über die Hinterkante 203 hinaus, fort.

Das hier gezeigte Profil des Rotorblatts 201 ist rein schematisch, und ein erfindungsgemäßes Rotorblatt 201 kann ein beliebiges vorteilhaftes Profil aufweisen, solange das Profil wenigstens in Teilen eine stumpfe Hinterkante zeigt.

Weiter weist das Rotorblatt 201 erfindungsgemäß eine Splitterplatte 207 auf, wobei ein vergrößerter Ausschnitt 208 von Teilen des Rotorblatts 201, insbesondere der Hinterkante 203, und der Splitterplatte 207 in den Fig. 3 bis 5 näher betrachtet wird.

Fig. 3 zeigt eine erste Ausführungsform einer bevorzugten Splitterplatte, wobei gleiche Referenzzeichen gleiche Merkmale bezeichnen. Die in Fig. 3 gezeigte Splitterplatte 301 weist eine Wurzelkante 302 und eine Endkante 303 auf. Zwischen der Wurzelkante 302 und der Endkante 303 ist die Fläche der Splitterplatte 301 positiv in Profilsehnenrichtung, das heißt X-Richtung, gekrümmt. Der Punkt 304 bezeichnet zum einen den Punkt der Splitterplatte 301, an dem die Fläche der Splitterplatte 301 einen maximalen Abstand zur Profilsehne 206 des Rotorblatts 201 einnimmt, zum anderen den Punkt, an dem sich die von der Saugseite 204 erzeugte Scherströmung an die Splitterplatte 301 anlegt. In dieser Ausführungsform ist die Wurzelkante 302 der Splitterplatte 301 unterhalb des Übergangs der Saugseite 204 zur Hinterkante 203, aber oberhalb der Profilsehne 206 angeordnet. Die Wurzelkante 302 weist somit einen Abstand 305 von der Wurzelkante 302 zur Profilsehne 206 auf. Beim Anordnen der Splitterplatte 301 am Rotorblatt 201 kann dieser Abstand 305 so gewählt werden, dass die Splitterplatte 301 ab dem Punkt 304 optimal an der Scherschicht anliegt. Auch der Abstand 308 zwischen Wurzelkante 302 und dem Punkt 304 mit dem maximalen Abstand der Fläche der Splitterplatte 301 zur Profilsehne 206 kann ebenfalls so gewählt werden, dass sich der hintere Teil der Splitterplatte 301 optimal in die Scherschicht einfügt. Die Länge 306 der Splitterplatte 301 entlang der Profilsehnenrichtung zwischen Wurzelkante 302 und Endkante 303 ist wiederum abhängig von der Hinterkantendicke 307.

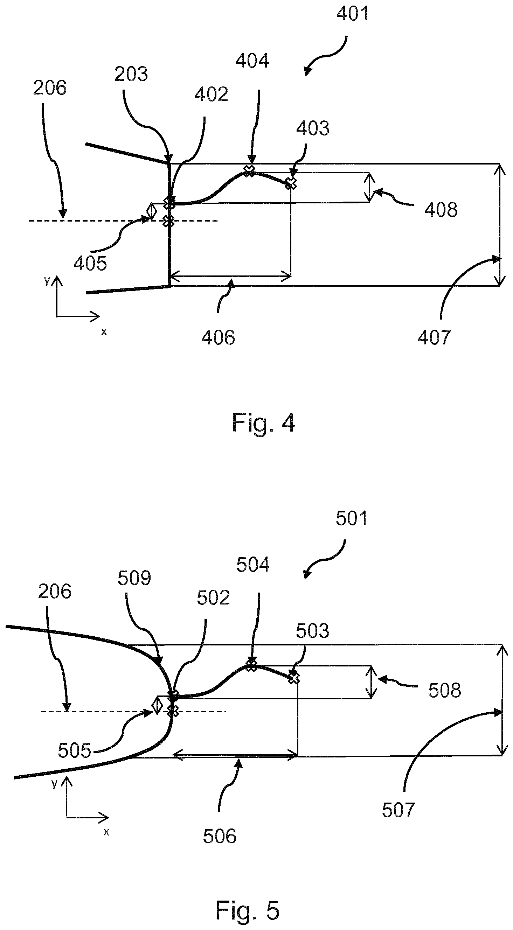

Fig. 4 zeigt eine weitere Ausführungsform der erfindungsgemäßen Splitterplatte. Auch in dieser Ausführungsform weist die Splitterplatte 401 eine Wurzelkante 402 unterhalb des Übergangs von der Saugseite 204 zur Hinterkante 203 und eine Endkante 403 auf. Wie bereits in der vorherigen Ausführungsform definiert der Punkt 404 den maximalen Abstand der Fläche der Splitterplatte 401 von der Profilsehne 206 des Rotorblatts 201 und beschreibt den Punkt, an dem sich die Scherschicht an die Splitterplatte 401 anlegt. Im Unterschied zu der vorherigen Ausführungsform der Splitterplatte 401 weist die Splitterplatte 401 in einem ersten Teil, der direkt an die Wurzelkante 402 anschließt, eine negative Krümmung in Profilsehnenrichtung, das heißt X-Richtung, und in einem zweiten Teil, der bis zur Endkante 403 reicht, eine positive Krümmung in Profilsehnenrichtung auf. Wie schon in der vorherigen Ausführungsform wird der Abstand 405 zwischen der Wurzelkante 402 und der Profilsehne 206 entsprechend des Verlaufs der Scherströmung nach dem Übergang der Saugseite 204 in die Hinterkante 203 bestimmt und wird so eingestellt, dass der positiv gekrümmte Teil der Splitterplatte 401 zumindest teilweise an der Scherströmung anliegt. Auch der Abstand 408 zwischen der Wurzelkante 402 und dem Punkt 404 wird entsprechend bestimmt. Die Länge 406 der Splitterplatte 401 bestimmt sich auch in dieser Ausführungsform über die Hinterkantendicke 407 des Rotorblatts 201.

Fig. 5 zeigt eine Ausführungsform der Splitterplatte entsprechend der Ausführungsform der Fig. 4, wobei die Splitterplatte 501 wieder eine Wurzelkante 502, eine Endkante 503 und einen Punkt 504, der den maximalen Abstand der Splitterplatte 501 von der Profilsehne 206 anzeigt, aufweist. In dieser Ausführungsform zeigt das Rotorblatt 201 ein Hinterkantenprofil, das von dem Hinterkantenprofil der vorherigen Abbildungen abweicht. Die Hinterkante 509 ist in dieser Ausführungsform abgerundet und weist keine scharfen Kanten im Übergang zwischen der Saugseite 204 und der Hinterkante 509 auf. Auch in einer solchen Ausführungsform kann ein Abstand 505 zwischen der Profilsehne 206 und der Wurzelkante 502 definiert werden und so eingestellt werden, dass der hintere Teil der Splitterplatte 501 innerhalb der Scherschicht, die von der Saugseite 204 erzeugt wird, liegt. Der Abstand 508 zwischen der Wurzelkante 502 und dem Punkt 504 wird auch in dieser Ausführungsform, wie in den vorherigen Ausführungsformen bestimmt. Des Weiteren kann auch in diesem Fall eine Hinterkantendicke 507 definiert werden, von der abhängig die Länge 506 der Splitterplatte 501 bestimmt wird. Die Hinterkantendicke 507 kann zum Beispiel hier so definiert werden, dass bestimmt wird, an welchen Punkten des Rotorblattprofils das Rotorblattprofil die Sollprofilkontur zugunsten der Radien der Hinterkante verlässt. Der Abstand dieser beiden Punkte zueinander kann dann als Hinterkantendicke 507 definiert werden.

In einer weiteren Ausführungsform weist das Rotorblatt eine Gurney-Flap auf, wobei die Splitterplatte an dem Gurney-Flap angeordnet ist. In dieser Ausführungsform wird die stumpfe Hinterkante durch den Gurney-Flap definiert, wobei das Rotorblatt selbst keine stumpfe Hinterkante aufweisen muss.

In einer weiteren Ausführungsform kann die Splitterplatte mit einer Saugseitenverlängerung kombiniert werden. Bei einer derartigen Kombination kann die Splitterplatte verwendet werden, um die Bildung einer Kármánstraße hinter der Saugseitenverlängerung zu verhindern. Die Verbesserung des Auftriebs kann in dieser Ausführungsform ganz oder teilweise von der Saugseitenverlängerung übernommen werden. Dabei können eine Endkante der Saugseitenverlängerung und die Endkante der Splitterplatte zusammenfallen.

Die gezeigten Ausführungsbeispiele für eine erfindungsgemäße Splitterplatte sind nicht abschließend. So könnte in einer weiteren Ausführungsform die Splitterplatte von der Wurzelkante zur Endkante eine Rechtskrümmung in Profilsehnenrichtung aufweisen. Des Weiteren kann die Splitterplatte beginnend an der Wurzelkante zunächst eine Rechtskrümmung in Profilsehnenrichtung und dann z. B. ab dem Punkt des maximalen Abstandes der Splitterplatte von der Profilsehne in eine Gerade übergehen. Dabei könnte die positive Krümmung in Profilsehnenrichtung kontinuierlich ab dem Punkt des maximalen Abstandes von der Profilsehne abnehmen, bis die Splitterplatte gerade wird. Des Weiteren könnte die Splitterplatte vom Wurzelpunkt aus ab dem Wurzelpunkt gerade und dann rechtsgekrümmt sein. In einer weiteren Ausführungsform könnte die Splitterplatte auch ab dem Wurzelpunkt linksgekrümmt sein, dann eine Kante aufweisen und nach der Kante in Profilsehnenrichtung rechtsgekrümmt sein.

In einer bevorzugten Ausführungsform beträgt die Länge der Splitterplatte 0,75 - 1,5-mal der Hinterkantendicke, wobei die Splitterplatte auch kürzer ausgestaltet sein kann, zum Beispiel aufgrund des Verlaufs der Scherschicht.

Zum Erreichen einer aerodynamischen Wirkung der Splitterplatte ist es besonders vorteilhaft, wenn spätestens ab zwei Dritteln der Länge der Splitterplatte gemessen von der Wurzelkante zur Endkante eine Rechtskrümmung in Profilsehnenrichtung beginnt. Weist die Splitterplatte einen Krümmungswechsel, zum Beispiel einen Krümmungswechsel von Links- zu Rechtskrümmung, auf, ist es vorteilhaft, wenn der Krümmungswechsel zwischen 0 % und 80 % der Länge der Splitterplatte gemessen von der Wurzelkante zur Endkante stattfindet.

Der Abstand zwischen der Wurzelkante und dem Punkt mit dem maximalen Abstand von der Profilsehne, wobei dieser Abstand auch Hügelhöhe genannt wird, kann bestimmt sein durch den Verlauf der Scherströmung im optimalen Anstellwinkelbereich des Rotorblatts. Des Weiteren kann die Scherströmung und damit auch die Hügelhöhe, von zusätzlichen Bauteilen wie zum Beispiel Gurney Flaps, die am Rotorblatt angebracht sind, abhängen. Dabei ist es möglich, den Verlauf der Scherströmung experimentell zum Beispiel durch Windkanalmessungen oder mittels 2D- oder 3D-Computersimulationen zu ermitteln. Entsprechend ist es auch möglich, eine optimale Position der Hügelhöhe und des Abstandes zwischen der Wurzelkante und der Profilsehne so zu bestimmen, dass die gekrümmte Fläche der Splitterplatte in der Scherschicht liegt. Obwohl alle oben gezeigten Ausführungsformen eine Wurzelkante zeigen, die oberhalb der Profilsehne angeordnet ist, ist es auch möglich, dass die Wurzelkante unterhalb der Profilsehne angeordnet ist. Des Weiteren kann die Endkante der Splitterplatte sowohl oberhalb als auch unterhalb der Wurzelkante liegen.

## Patentansprüche

1. Rotorblatt einer Windenergieanlage, wobei das Rotorblatt (201) aufweist:
eine Vorderkante und eine stumpfe Hinterkante (203, 509),
eine Saugseite (204) und eine Druckseite (205) zwischen der Vorderkante und der Hinterkante (203, 509), wobei die Saugseite (204) bei Luftumströmung eine Scherschicht erzeugt,
wobei die Vorderkante, die stumpfe Hinterkante (203, 509), die Saugseite (204) und die Druckseite (205) ein Bezugsystem bilden, in dem die Vorderkante vor der Hinterkante (203, 509) und die Saugseite (204) oberhalb der Druckseite (205) angeordnet ist, und wobei in diesem Bezugsystem eine Profilsehnenrichtung von der Vorderkante zur Hinterkante (203, 509) verläuft, und
eine Splitterplatte (207, 301, 401, 501), die an der stumpfen Hinterkante (203, 509) des Rotorblatts (201) angeordnet ist, wobei die Splitterplatte (207, 301, 401, 501) aufweist:
eine Wurzelkante (302, 402, 502), wobei die Wurzelkante (302, 402, 502) an, insbesondere entlang der Hinterkante (203,509), unterhalb eines Übergangs der Saugseite (204) in die Hinterkante (203, 509) angeordnet ist,
eine Endkante (303, 403, 503), wobei die Endkante (303, 403, 503) eine freie Kante bildet, und
eine Fläche zwischen der Wurzelkante (302, 402, 502) und der Endkante (303, 403, 503) **dadurch gekennzeichnet, dass** die Fläche wenigstens einen gekrümmten Teil zwischen der Wurzelkante (302, 402, 502) und der Endkante (303, 403, 503) aufweist und wenigstens ein Teil der Fläche in der von der Saugseite (204) erzeugten Scherschicht liegt.

2. Rotorblatt nach Anspruch 1, wobei der gekrümmte Teil der Fläche zumindest teilweise in der Scherschicht liegt, wobei die Krümmung des gekrümmten Teils, der in der Scherschicht liegt, basierend auf einer Bestimmung der Belastbarkeit der Scherschicht bestimmt wird.

3. Rotorblatt nach Anspruch 2, wobei der gekrümmte Teil der Fläche eine Rechtskrümmung in Bezug auf die Profilsehnenrichtung des Rotorblatts (201) aufweist, und
wobei ein Punkt auf der Fläche der Splitterplatte (207), an dem die Fläche der Splitterplatte (207) einen maximalen Abstand von einer Profilsehne (206) des Rotorblatts (201) aufweist, die Wurzelkante ist,oder wobei ein Punkt (304, 404, 504) auf der Fläche der Splitterplatte (207, 301, 401, 501), an dem die Fläche der Splitterplatte (207, 301, 401, 501) einen maximalen Abstand zu einer Profilsehne (206) des Rotorblatts (201) aufweist, zwischen der Wurzelkante (302, 402, 502) und der Endkante (303, 403, 503) liegt.

4. Rotorblatt nach Anspruch 2 , wobei der gekrümmte Teil der Fläche einen ersten Teil und einen zweiten Teil aufweist, wobei der erste Teil und der zweite Teil unterschiedliche Krümmungen aufweisen,
wobei der erste Teil eine Linkskrümmung in Bezug auf die Profilsehnenrichtung des Rotorblatts (201) aufweist und der zweite Teil eine Rechtskrümmung in Bezug auf die Profilsehnenrichtung des Rotorblatts (201) aufweist, und wobei der zweite Teil in Profilsehnenrichtung an den ersten Teil anschließt.

5. Rotorblatt nach Anspruch 4, wobei ein Übergang zwischen dem ersten Teil und dem zweiten Teil eine Kante aufweist.

6. Rotorblatt nach einem der Ansprüche 4 bis 5, wobei der zweite Teil in Profilsehnenrichtung ab wenigstens zwei Dritteln einer Länge der Splitterplatte (207, 301, 401, 501) in Profilsehnenrichtung ansetzt.

7. Rotorblatt nach einem der Ansprüche 4 bis 6, wobei die Rechtskrümmung des zweiten Teils in Profilsehnenrichtung kontinuierlich abnimmt.

8. Rotorblatt nach einem der Ansprüche 5 bis 7, wobei ein Punkt auf der Fläche der Splitterplatte (207, 301, 401, 501), an dem die Fläche der Splitterplatte (207, 301, 401, 501) einen maximalen Abstand zu einer Profilsehne (206) des Rotorblatts (201) aufweist, in dem zweiten Teil liegt.

9. Rotorblatt nach einem der vorherigen Ansprüche, wobei der gekrümmte Teil der Fläche an der Wurzelkante (302, 402, 502) beginnt.

10. Rotorblatt nach einem der vorherigen Ansprüche, wobei die Splitterplatte (207) einen gerade Teil aufweist und der gerade Teil in Profilsehnenrichtung an den gekrümmten Teil anschließt und mit der Endkante endet, wobei der gerade Teil wenigstens teilweise in der Scherschicht liegt.

11. Rotorblatt nach einem der vorherigen Ansprüche, wobei die Hinterkante (203, 509) des Rotorblatts (201) eine Hinterkantendicke aufweist und die Länge (306, 406, 506) der Splitterplatte (207, 301, 401, 501) in Profilsehnenrichtung zwischen Wurzelkante (302, 402, 502) und Endkante (303, 403, 503) 0,75 bis 1,5-mal der Hinterkantendicke beträgt und/oder wobei die Endkante (303, 403, 503) der Splitterplatte (207, 301, 401, 501) einen größeren Abstand zu der Profilsehne (206) des Rotorblatts (201) aufweist als die Wurzelkante (302, 402, 502) und in der Scherschicht liegt.

12. Rotorblatt nach einem der vorherigen Ansprüche, wobei die Splitterplatte (207, 301, 401, 501) so an der Hinterkante (203, 509) des Rotorblatts (201) angeordnet ist, dass die Wurzelkante (302, 402, 502) einen Abstand zu der Profilsehne (206) des Rotorblatts (201) aufweist, wobei der Abstand zur Profilsehne (206) so eingestellt ist, dass ein Teil der Splitterplatte (207, 301, 401, 501) in der Scherschicht liegt.

13. Rotorblatt nach einem der vorherigen Ansprüche, wobei der Splitterplatte (207, 301, 401, 501) mittels eines Scharniers an der Hinterkante (203, 509) des Rotorblatts (201) angeordnet ist.

14. Windenergieanlage mit einem Rotorblatt (201) nach Anspruch 1.

15. Verfahren zum Optimieren eines Rotorblatts (201) einer Windenergieanlage nach Anspruch 1, wobei das Verfahren die Schritte aufweist:
Bestimmen eines Strömungsbildes des Rotorblatts (201), wobei das Bestimmen ein Bestimmen einer Lage einer Scherschicht, die von einer Saugseite (204) des Rotorblatts (201) erzeugt wird, umfasst, und
Bestimmen eines Abstands der Wurzelkante (302, 402, 502) der Splitterplatte (207, 301, 401, 501) von einer Profilsehne (206) des Rotorblatts (201) und einer Krümmung der Splitterplatte so, dass wenigstens ein Teil der Splitterplatte in der Scherströmung liegt.

## Claims

1. A rotor blade of a wind turbine, the rotor blade (201) comprising:
a leading edge and a blunt trailing edge (203, 509),
a suction side (204) and a pressure side (205) between the leading edge and the trailing edge (203, 509), the suction side (204) producing a shear layer when air flows around,
wherein the leading edge, the blunt trailing edge (203, 509), the suction side (204) and the pressure side (205) form a reference system in which the leading edge is arranged in front of the trailing edge (203, 509) and the suction side (204) is arranged above the pressure side (205), and wherein in this reference system a chord direction runs from the leading edge to the trailing edge (203, 509), and
a splitter plate (207, 301, 401, 501 ) disposed at the blunt trailing edge (203, 509) of the rotor blade (201), the splitter plate (207, 301, 401, 501) comprising:
a root edge (302, 402, 502), wherein the root edge (302, 402, 502) is arranged at, in particular along, the trailing edge (203, 509) below a transition of the suction side (204) into the trailing edge (203, 509),
an end edge (303, 403, 503), wherein the end edge (303, 403, 503) forms a free edge, and a surface between the root edge (302, 402, 502) and the end edge (303, 403, 503) **characterized in that** the surface has at least one curved part between the root edge (302, 402, 502) and the end edge (303, 403, 503) and at least a part of the surface lies in the shear layer generated by the suction side (204).

2. The rotor blade according to claim 1, wherein the curved part of the surface is at least partially located in the shear layer, wherein the curvature of the curved part located in the shear layer is determined based on a determination of the resilience of the shear layer.

3. The rotor blade according to claim 2, wherein the curved part of the surface has a rightward curvature with respect to the chord direction of the rotor blade (201), and wherein a point on the surface of the splitter plate (207) at which the surface of the splitter plate (207) is a maximum distance from a chord (206) of the rotor blade (201) is the root edge, or wherein a point (304, 404, 504) on the surface of the splitter plate (207, 301, 401, 501), at which the surface of the splitter plate (207, 301, 401, 501) has a maximum distance to a chord (206) of the rotor blade (201), is between the root edge (302, 402, 502) and the end edge (303, 403, 503).

4. The rotor blade according to claim 2, wherein the curved part of the surface comprises a first part and a second part, the first part and the second part having different curvatures,
wherein the first part has a leftward curvature with respect to the chord direction of the rotor blade (201) and the second part has a rightward curvature with respect to the chord direction of the rotor blade (201), and wherein the second part adjoins the first part in the chord direction.

5. The rotor blade according to claim 4, wherein a transition between the first part and the second part includes an edge.

6. The rotor blade according to any one of claims 4 to 5, wherein the second part attaches in the chord direction from at least two-thirds of a length of the splitter plate (207, 301, 401, 501) in the chord direction.

7. The rotor blade according to any one of claims 4 to 6, wherein the rightward curvature of the second part continuously decreases in the chord direction.

8. The rotor blade according to any one of claims 5 to 7, wherein a point on the surface of the splitter plate (207, 301, 401, 501) at which the surface of the splitter plate (207, 301, 401, 501) is a maximum distance from a chord (206) of the rotor blade (201) is located in the second part.

9. The rotor blade according to any one of the preceding claims, wherein the curved part of the surface begins at the root edge (302, 402, 502).

10. The rotor blade according to any one of the preceding claims, wherein the splitter plate (207) has a straight part, and the straight part joins the curved part in the chord direction and terminates with the end edge, the straight part lies at least partially in the shear layer.

11. The rotor blade according to any one of the preceding claims, wherein the trailing edge (203, 509) of the rotor blade (201) has a trailing edge thickness and the length (306, 406, 506) of the splitter plate (207, 301, 401, 501) in chord direction between root edge (302, 402, 30 502) and end edge (303, 403, 503) is 0.75 to 1.5 times the trailing edge thickness and/or wherein the end edge (303, 403, 503) of the splitter plate (207, 301, 401, 501) has a greater distance to the chord (206) of the rotor blade (201) than the root edge (302, 402, 502) and lies in the shear layer.

12. The rotor blade according to any one of the preceding claims, wherein the splitter plate (207, 301, 5 401, 501) is arranged at the trailing edge (203, 509) of the rotor blade (201) such that the root edge (302, 402, 502) is spaced from the chord (206) of the rotor blade (201), wherein the distance from the chord (206) is adjusted such that a part of the splitter plate (207, 301, 401, 501) lies in the shear layer.

13. The rotor blade according to any one of the previous claims, wherein the splitter plate (207, 301, 401, 501) is arranged on the trailing edge (203, 509) of the rotor blade (201) by means of a hinge.

14. A wind turbine having a rotor blade (201) according to claim 1.

15. A method for optimizing a rotor blade (201) of a wind turbine according to claim 1, the method comprising the steps of:
determining a flow pattern of the rotor blade (201 ), the determining comprising determining a location of a shear layer generated by a suction side (204) of the rotor blade (201); and
Determining a distance of the root edge (302, 402, 502) of the splitter plate (207, 301, 401, 501) from a chord (206) of the rotor blade (201) and a curvature of the splitter plate such that at least a part of the splitter plate lies in the shear flow.

## Revendications

1. Pale de rotor d'une installation d'énergie éolienne, la pale de rotor (201) comprenant :
un bord d'attaque et un bord de fuite émoussé (203, 509),
une face intrados (204) et une face extrados (205) entre le bord d'attaque et le bord de fuite (203, 509), la face intrados (204) produisant une couche de cisaillement lorsque l'air circule,
dans lequel le bord d'attaque, le bord de fuite émoussé (203, 509), la face intrados (204) et la face extrados (205) forment un système de référence dans lequel le bord d'attaque est situé avant le bord de fuite (203, 509) et la face intrados (204) est situé au-dessus de la face extrados (205), et dans lequel une direction de corde du profil s'étend du bord d'attaque au bord de fuite (203, 509), et
une plaque à éclats (207, 301, 401, 501) disposée sur le bord de fuite émoussé (203, 509) de la pale de rotor (201), la plaque à éclats (207, 301, 401, 501) comprenant :
un bord d'emplanture (302, 402, 502), le bord d'emplanture (302, 402, 502) étant disposée au niveau, en particulier le long, du bord de fuite (203, 509), en dessous d'une transition de la face intrados (204) dans le bord de fuite (203, 509),
un bord d'extrémité (303, 403, 503), le bord d'extrémité (303, 403, 503) formant un bord libre, et
une surface entre le bord d'emplanture (302, 402, 502) et le bord d'extrémité (303, 403, 503), **caractérisé en ce que** la surface comprend au moins une partie incurvée entre le bord d'emplanture (302, 402, 502) et le bord d'extrémité (303, 403, 503) et au moins une partie de la surface est située dans la couche de cisaillement générée par la face intrados (204).

2. Pale de rotor selon la revendication 1 dans laquelle la partie incurvée de la surface se trouve au moins partiellement dans la couche de cisaillement, dans laquelle la courbure de la partie incurvée qui se trouve dans la couche de cisaillement est déterminée sur la base d'une détermination de la capacité de charge de la couche de cisaillement.

3. Pale de rotor selon la revendication 2 dans laquelle la partie incurvée de la surface présente une courbure à droite par rapport à la direction de la corde du profil de la pale de rotor (201), et
dans laquelle un point sur la surface de la plaque à éclats (207), où la surface de la plaque à éclats (207) présente une distance maximale par rapport à une corde du profil (206) de la pale de rotor (201), est le bord d'attaque, ou dans laquelle un point (304, 404, 504) sur la surface de la plaque à éclats (207, 301, 401, 501), au niveau duquel la surface de la plaque à éclats (207, 301, 401, 501) présente une distance maximale par rapport à une corde du profil (206) de la pale de rotor (201), est situé entre le bord d'emplanture (302, 402, 502) et le bord d'extrémité (303, 403, 503).

4. Pale de rotor selon la revendication 2 dans laquelle la partie incurvée de la surface comprend une première partie et une deuxième partie, la première partie et la deuxième partie ayant des courbures différentes,
dans lequel la première partie présente une courbure vers la gauche par rapport à la direction de la corde du profil de la pale de rotor (201) et la deuxième partie présente une courbure vers la droite par rapport à la direction de la corde du profil de la pale de rotor (201), et dans lequel la deuxième partie se raccorde à la première partie dans la direction de la corde du profil.

5. Pale de rotor selon la revendication 4, dans laquelle une transition entre la première partie et la deuxième partie présente un bord.

6. Pale de rotor selon l'une des revendications 4 à 5 dans laquelle la deuxième partie commence dans la direction de la corde du profil à partir d'au moins deux tiers d'une longueur de la plaque à éclats (207, 301, 401, 501) dans la direction de la corde du profil.

7. Pale de rotor selon l'une des revendications 4 à 6 dans laquelle la courbure vers la droite de la deuxième partie diminue de manière continue dans la direction de la corde du profil.

8. Pale de rotor selon l'une des revendications 5 à 7 dans laquelle un point sur la surface de la plaque à éclats (207, 301, 401, 501), au niveau duquel la surface de la plaque à éclats (207, 301, 401, 501 ) présente une distance maximale par rapport à une corde du profil (206) de la pale de rotor (201), est situé dans la deuxième partie.

9. Pale de rotor selon l'une des revendications précédentes dans laquelle la partie incurvée de la surface commence au niveau du bord d'emplanture (302, 402, 502).

10. Pale de rotor selon l'une des revendications précédentes dans laquelle la plaque à éclats (207) comprend une partie droite, la partie droite se raccordant à la partie courbe dans le sens de la corde du profil et se terminant par le bord d'extrémité, la partie droite étant au moins partiellement située dans la couche de cisaillement.

11. Pale de rotor selon l'une des revendications précédentes dans laquelle le bord de fuite (203, 509) de la pale de rotor (201) présente une épaisseur de bord de fuite et la longueur (306, 406, 506) de la plaque à éclats (207, 301, 401, 501) dans la direction de la corde du profil entre le bord d'emplanture (302, 402, 30 502) et le bord d'extrémité (303, 403, 503) est de 0,75 à 1,5 fois l'épaisseur du bord de fuite et/ou dans lequel le bord d'extrémité (303, 403, 503) de la plaque à éclats (207, 301, 401, 501) présente une distance plus grande par rapport à la corde du profil (206) de la pale de rotor (201) que le bord d'emplanture (302, 402, 502) et se trouve dans la couche de cisaillement.

12. Pale de rotor selon l'une des revendications précédentes dans laquelle la plaque à éclats (207, 301, 5 401, 501) est disposée sur le bord de fuite (203, 509) de la pale de rotor (201) de telle sorte que le bord d'emplanture (302, 402, 502) est espacé de la corde du profil (206) de la pale de rotor (201), l'espacement par rapport à la corde du profil (206) étant réglé de telle sorte qu'une partie de la plaque à éclats (207, 301, 401, 501) se trouve dans la couche de cisaillement.

13. Pale de rotor selon l'une des revendications précédentes dans laquelle la plaque à éclats (207, 301, 401, 501) est disposée sur le bord de fuite (203, 509) de la pale de rotor (201) au moyen d'une charnière.

14. Installation d'énergie éolienne avec une pale de rotor (201) selon la revendication 1.

15. Procédé d'optimisation d'une pale de rotor (201) d'une installation d'énergie éolienne selon la revendication 1, le procédé comprenant les étapes consistant à :
déterminer un modèle d'écoulement de la pale de rotor (201), la détermination comprenant la détermination d'une position d'une couche de cisaillement générée par une face intrados (204) de la pale de rotor (201), et
déterminer une distance du bord d'emplanture (302, 402, 502) de la plaque à éclats (207, 301, 401, 501) par rapport à une corde du profil (206) de la pale de rotor (201) et une courbure de la plaque à éclats de sorte qu'au moins une partie de la plaque à éclats se trouve dans l'écoulement de cisaillement.
